# FASCICULE DE BREVET EUROPEEN

(11) **EP 2 638 075 B1**
(45) Date de publication et mention de la délivrance du brevet: **28.06.2017**
(21) Numéro de dépôt: 11799122.4
(22) Date de dépôt: 08.11.2011
(51) Int. Cl.: C08C 19/20, C08C 19/22, C08C 19/30, C08L 95/00, E01C 7/18

(54) **POLYMERES GREFFES RETICULES DE MANIERE THERMOREVERSIBLE**
WÄRMEUMKEHRBARE VERNETZTE PFROPFPOLYMERE
THERMOREVERSIBLY CROSS-LINKED GRAFT POLYMERS

(30) Priorité: 12.11.2010 FR 1059335
(43) Date de publication de la demande: 18.09.2013
(73) Titulaire: Total Raffinage Marketing, 92800 Puteaux (FR); Centre National de la Recherche Scientifique, 75794 Paris Cedex 16 (FR)
(72) Inventeur: HARDERS, Sylvia, 25712 Buccholz (DE); LEIBLER, Ludwik, F-75006 Paris (FR); ILIOPOULOS, Ilias, F-75012 Paris (FR); PREVOST, Julie, F-75014 Paris (FR)
(74) Mandataire: Hirsch & Associés
(86) Numéro de dépôt international: PCT/IB2011/054974
(87) Numéro de publication internationale: WO 2012/063197

(56) Documents cités:
- WO-A2-2004/096865
- WO-A2-2009/030840
- US-A- 5 804 619

## Description

### DOMAINE TECHNIQUE

La présente invention concerne des polymères greffés réticulés de manière thermoréversible. Ces polymères trouvent une application dans de nombreux domaines, c'est pourquoi la présente invention concerne aussi l'utilisation desdits polymères greffés dans des revêtements, des peintures, des thermoplastiques, des colles, des lubrifiants, des carburants, des encres, des ciments, des matériaux de construction, des caoutchoucs et des bitumes. En particulier, l'invention concerne les compositions bitume/polymère à base de bitume et desdits polymères greffés. Enfin l'invention concerne les procédés de préparation des polymères greffés et des compositions bitume/polymère à base de bitume et desdits polymères greffés.

### ART ANTERIEUR

Les polymères greffés selon l'invention sont des polymères capables de s'assembler entre eux, de former un réseau supramoléculaire via un système de réticulation thermoréversible. Les polymères greffés selon l'invention ne sont pas liés entre eux via des liaisons covalentes, liaisons qui une fois formées ne peuvent être rompues et qui sont donc irréversibles, mais liés entre eux via des liaisons thermoréversibles, c'est-à-dire qui sont présentes dans une certaine gamme de température et disparaissent dans d'autres gammes de températures. Ceci peut être particulièrement avantageux dans la technologie des revêtements dans laquelle, on a besoin de polymères ayant une faible viscosité sous un cisaillement à haute vitesse pendant son application et qui redevient visqueux après son application. Ceci et particulièrement vrai dans le domaine des bitumes. Pour pouvoir être utilisé, le bitume doit présenter certaines propriétés mécaniques et notamment des propriétés élastiques ou cohésives. Le bitume seul n'étant en général pas assez élastique ou cohésif, on ajoute au bitume des polymères qui peuvent être éventuellement réticulés, notamment avec du soufre. Lorsque ces polymères sont réticulés, la réticulation est irréversible. Une fois la réticulation effectuée, il n'est pas possible de revenir à l'état initial existant avant la réaction de réticulation. Les compositions bitume/polymère réticulées ont ainsi de bonnes propriétés mécaniques, mais une viscosité très élevée. Il existe donc un besoin pour des polymères présentant une association entre chaînes polymériques qui soit thermoréversible.

Il existe dans la littérature quelques exemples d'associations entre des molécules qui conduisent à des polymères supramoléculaires. Le brevet EP0929597 décrit des polymères supramoléculaires à base de motifs ayant de groupements uréido-pyrimidone. Le brevet EP1031589 décrit des polymères supramoléculaires obtenus par réaction entre des molécules contenant des fonctions isocyanates et des molécules contenant des fonctions hydroxy, amine ou acide. La demande de brevet EP1136506 décrit des polymères supramoléculaires à base de motifs à fonctions glutarimides. Le brevet EP1202951 décrit des polymères supramoléculaires obtenus par réaction entre un acide ou chlorure d'acide avec un dérivé aromatique substitué par des fonctions hydroxyle et acide. Le brevet EP1465930 décrit des polymères supramoléculaires à base de motifs ayant des groupements imidazolidinones. La demande de brevet EP2069422 décrit des polymères supramoléculaires issus de la réaction entre des dérivés imidazolidinones et des dérivés d'acides gras.

La société demanderesse a elle-même mis au point des polymères supramoléculaires décrits dans les demandes de brevet EP2178924, EP2178925 et EP2217648. Les premiers sont basés sur des polymères greffés avec des fonctions thiols et les derniers sont obtenus par réaction entre des mélanges d'acides gras polymérisés et des molécules comprenant des motifs urées, amides, uréthanes ou imidazolidinones. Dans la demande EP0799252 de la société demanderesse, des élastomères fonctionnalisés sont décrits. Ces élastomères sont fonctionnalisés par des dérivés dithiols comprenant aussi des fonctions acides qui induisent une réticulation via des liaisons hydrogène. L'ajout d'amines peut aussi induire une réticulation de type ionomère supplémentaire.

Dans les demandes de brevet EP2178924 et EP2178925, le procédé de préparation des polymères greffés fait intervenir un polymère et un dérivé thiol comprenant une longue chaîne hydrocarbonée d'au moins 18 atomes de carbone. Si le procédé de greffage fonctionne correctement avec un dérivé thiol de 18 atomes de carbones, les rendements de greffage pouvant aller de 60% à 80%, les procédés de greffage faisant intervenir des dérivés thiols plus longs tels que ceux comprenant une longue chaîne hydrocarbonée de 40 atomes de carbone ou de 70 atomes de carbone sont moins satisfaisants, puisque les rendements de greffage ne sont que de 20%. De plus il est très difficile de séparer les polymères greffés avec des greffons de 40 atomes de carbone ou de 70 atomes de carbone, des dérivés thiols n'ayant pas réagi, ce qui peut modifier considérablement les propriétés des polymères greffés obtenus. Il est donc difficile d'obtenir des polymères greffés avec de très longs domaines paraffiniques et c'est ce que la société demanderesse a notamment cherché à améliorer.

### RESUME DE L'INVENTION

Dans la continuité de ses travaux, la société demanderesse a maintenant développé de nouveaux polymères greffés que l'on peut obtenir plus facilement, tout en conservant un greffon ayant un domaine paraffinique de très grande longueur. De plus les nouveaux polymères greffés possèdent des propriétés de thermoréversibilité améliorées grâce à l'introduction d'une nouvelle fonction au sein de ces polymères greffés. Ainsi, les nouveaux polymères greffés ont formé des gels particulièrement performants, notamment dans un solvant organique tel que le toluène et également dans le bitume. Le rendement de greffage est supérieur à ceux obtenus précédemment, à quantité équivalent d'atomes de carbones sur le greffon. Le gel formé par les nouveaux polymères greffés, est présent dans une certaine gamme de température et disparaît lorsque la température augmente. Les nouveaux polymères greffés selon l'invention sont donc capables d'induire une réticulation thermoréversible.

Par ailleurs, la société demanderesse a également développé de nouvelles compositions bitume/polymère présentant, aux températures d'usage, les propriétés des compositions bitume/polymère réticulées de manière irréversible au niveau notamment de l'élasticité et/ou de la cohésion, et présentant aux températures de mise en oeuvre, une viscosité réduite.

Enfin, un autre objet de l'invention consiste à fournir des compositions bitume/polymère stables au stockage et résistantes au vieillissement.

Les nouveaux polymères greffés selon l'invention sont des polymères **PG** comprenant une chaîne polymérique principale **P** et au moins un greffon latéral **G** relié à la chaîne principale polymérique **P**, le greffon **G** ayant pour formule générale (1) :

-S-R₁-X-R₂ (1)

avec :
- R₁ et R₂ qui représentent indépendamment l'un de l'autre, des groupes hydrocarbonés, linéaires ou ramifiés, insaturés ou saturés, tels que le nombre total d'atomes de carbone des groupes R₁ et R₂ est compris entre 2 et 110,
- X qui représente une fonction amide, amido-acide, urée ou uréthane, ledit greffon **G** étant relié à la chaîne principale polymérique **P** par l'intermédiaire de l'atome de soufre.

La présence des groupes R₁ et R₂ permet une réticulation thermoréversible via des domaines paraffiniques cristallisables. A basse température les interactions des zones cristallines des groupes R₁ et R₂ rapprochent les chaînes du polymère **P**, le polymère greffé **PG** est alors réticulé. Lorsque la température augmente, ces zones cristallines fondent, la réticulation, le rapprochement des chaînes de polymère **P** disparaît. Lorsque la température diminue de nouveau, les groupes R₁ et R₂ recristallisent et la réticulation réapparaît. La réticulation est donc thermoréversible.

De plus la présence, de la fonction X dans le polymère **PG** permet de renforcer la réticulation thermoréversible via des interactions de type liaisons hydrogène ou via des interactions polaires. A basse température, ces interactions permettent de renforcer le rapprochement, la réticulation des chaînes de polymère **P**. Lorsque la température augmente, ces interactions disparaissent tout comme la réticulation, le rapprochement des chaînes de polymère **P**. Lorsque la température diminue de nouveau, ces interactions réapparaissent, tout comme la réticulation. Ces deux types d'interactions induisent un effet de synergie au niveau de la réticulation du polymère **PG**.

Enfin, la réticulation thermoréversible étant favorisée par des groupes R₁ et R₂ comprenant un grand nombre d'atomes de carbone, les nouveaux polymères greffés permettent grâce à un procédé de synthèse en deux étapes, dans lequel est d'abord introduit le groupe R₁ puis le groupe R₂, d'obtenir plus facilement les dits polymères greffés **PG** avec des greffons ayant de grandes longueurs de chaînes. Il est en effet plus difficile de synthétiser un polymère greffé **PG** comprenant un seul groupe hydrocarboné que deux groupes hydrocarbonés, à nombre d'atomes de carbone égal.

La société demanderesse s'est aussi aperçue que de nouveaux polymères greffés avec des greffons de petite taille, c'est-à-dire des greffons comprenant de courtes chaînes, pouvaient être synthétisés.

### BREVE DESCRIPTION

L'invention concerne un polymère greffé **PG** comprenant une chaîne principale polymérique **P** et au moins un greffon latéral **G** relié à la chaîne principale polymérique **P**, le greffon **G** ayant pour formule générale (1) :

-S-R₁-X-R₂ (1)

avec R₁ et R₂ qui représentent indépendamment l'un de l'autre, des groupes hydrocarbonés, linéaires ou ramifiés, insaturés ou saturés tels que le nombre total d'atomes de carbone des groupes R₁ et R₂ est compris entre 2 et 110, X qui représente une fonction amide, amido-acide, urée ou uréthane, ledit greffon **G** étant relié à la chaîne principale polymérique **P** par l'intermédiaire de l'atome de soufre.

De préférence, le nombre total d'atomes de carbone des groupes R₁ et R₂ est compris entre 4 et 90, de préférence entre 8 et 70, plus préférentiellement entre 12 et 50, encore plus préférentiellement entre 16 et 40, encore plus préférentiellement entre 18 et 30, encore plus préférentiellement entre 20 et 24.

De préférence, R₁ représente un groupe hydrocarboné, linéaire, saturé de formule CₙH₂ₙ et R₂ représente un groupe hydrocarboné, linéaire, saturé de formule CₘH₂ₘ₊₁ avec n et m des nombres entiers tels que la somme n + m est comprise entre 2 et 110.

De préférence, n est compris entre 1 et 60, de préférence entre 2 et 50, plus préférentiellement entre 4 et 40, encore plus préférentiellement entre 6 et 25, encore plus préférentiellement entre 8 et 20, encore plus préférentiellement entre 9 et 15, encore plus préférentiellement entre 10 et 12 et m est compris entre 1 et 50, de préférence entre 2 et 40, plus préférentiellement entre 4 et 30, encore plus préférentiellement entre 6 et 25, encore plus préférentiellement entre 8 et 20, encore plus préférentiellement entre 9 et 15, encore plus préférentiellement entre 10 et 12.

De préférence, la chaîne principale polymérique **P** résulte de la copolymérisation de motifs diène conjugué et de motifs hydrocarbure monovinyl aromatique, en particulier de la copolymérisation de motifs butadiène et de motifs styrène.

De préférence, la teneur en motifs à doubles liaisons 1-2 issus du diène conjugué, en particulier de butadiène, est comprise entre 5% et 70% en masse, par rapport à la masse totale des motifs diène conjugué, en particulier de butadiène, de préférence entre 10% et 60%, plus préférentiellement entre 15% et 50%, encore plus préférentiellement entre 18% et 40%, encore plus préférentiellement entre 20% et 30%, encore plus préférentiellement entre 22% et 25%.

De préférence, X représente une fonction amide et la formule générale (1) s'écrit :

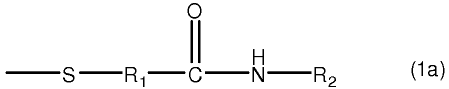

L'invention concerne aussi un procédé de préparation du polymère greffé tel que défini ci-dessus, dans lequel on fait réagir dans une première étape, au moins un polymère **P** et au moins un dérivé thiol de formule générale (2) : HS-R₁-Y, puis dans une deuxième étape au moins un dérivé de formule générale (3) : Z-R₂, avec R₁ et R₂ qui représentent indépendamment l'un de l'autre, des groupes hydrocarbonés, linéaires ou ramifiés, insaturés ou saturés tels que le nombre total d'atomes de carbone des groupes R₁ et R₂ est compris entre 2 et 110, Y qui représente une fonction acide, alcool ou amine, Z qui représente une fonction acide, alcool, amine, anhydride ou isocyanate, étant entendu que la réaction entre les deux fonctions Y et Z conduit à la fonction X de la formule générale (1).

L'invention concerne aussi l'utilisation du polymère greffé **PG** tel que défini ci-dessus dans des revêtements, des peintures, des thermoplastiques, des colles, des lubrifiants, des carburants, des encres, des ciments, des matériaux de construction, des caoutchoucs ou des bitumes.

L'invention concerne aussi une composition bitume/polymère comprenant au moins un bitume et au moins un polymère greffé **PG** tel que défini ci-dessus.

De préférence, la composition bitume/polymère comprend de 0,1 à 40% en masse de polymère greffé **PG**, par rapport à la masse de la composition bitume/polymère, de préférence de 0,5 à 30%, plus préférentiellement de 1 à 20%, encore plus préférentiellement de 2 à 10%, encore plus préférentiellement de 3 à 5%.

L'invention concerne aussi un procédé de préparation d'une composition bitume/polymère dans lequel on mélange au moins un bitume et au moins un polymère greffé **PG** tel que défini ci-dessus, à une température comprise entre 80°C et 200°C, de préférence entre 100°C et 180°C, plus préférentiellement entre 120°C et 160°C, pendant une durée de 30 minutes à 4 heures, de préférence de 1 heure à 2 heures.

L'invention concerne aussi l'utilisation du polymère greffé **PG** tel que défini ci-dessus dans une composition bitume/polymère pour réticuler de manière thermoréversible ladite composition bitume/polymère.

L'invention concerne aussi un enrobé bitumineux comprenant une composition bitume/polymère telle que définie ci-dessus et des granulats comprenant éventuellement des fines, du sable, des gravillons.

L'invention concerne aussi l'utilisation du polymère greffé **PG** tel que défini ci-dessus pour diminuer les températures d'enrobage, de répandage et/ou de compactage lors de la fabrication d'un enrobé bitumineux.

### DESCRIPTION DETAILLEE

L'invention concerne un polymère greffé **PG**. Par polymère greffé **PG**, on entend un polymère qui comprend une chaîne principale polymérique **P** et des greffons **G** latéraux reliés à cette chaîne. Les greffons **G** sont reliés directement à la chaîne principale **P** du polymère, en particulier par l'intermédiaire d'un atome de soufre. Les greffons **G** sont greffés à la chaîne principale polymérique **P**, après polymérisation de celle-ci, par réaction chimique, en une ou plusieurs étapes. Il en résulte une liaison covalente entre les greffons **G** et la chaîne principale **P** du polymère. Les polymères greffés **PG** selon l'invention sont donc obtenus par polymérisation, puis greffage des greffons **G** et non pas par polymérisation de monomères comprenant déjà des greffons **G**.

Le polymère greffé **PG** selon l'invention comprend une chaîne polymérique principale polymérique **P** et au moins un greffon latéral **G** relié à la chaîne principale polymérique **P**, le greffon **G** ayant pour formule générale (1) :

-S-R₁-X-R₂ (1)

dans laquelle :
- les groupes R₁ et R₂ représentent indépendamment l'un de l'autre, des groupes hydrocarbonés, linéaires ou ramifiés, insaturés ou saturés, tels que le nombre total d'atomes de carbone des groupes R₁ et R₂ est compris entre 2 et 110 et,
- le groupe X est choisi parmi les fonctions amide, amido-acide, ester, imide, urée ou uréthane. A noter que le greffon **G** est relié à la chaîne principale polymérique **P** par l'intermédiaire de l'atome de soufre.

De préférence, le nombre total d'atomes de carbone dans les groupes R₁ et R₂ est compris entre 4 et 90, plus préférentiellement entre 8 et 70, encore plus préférentiellement entre 12 et 50, encore plus préférentiellement entre 16 et 40, encore plus préférentiellement entre 18 et 30, encore plus préférentiellement entre 20 et 24. La présence de ces deux groupes R₁ et R₂, via leur nombre important de carbones est indispensable pour la cristallisation, la réticulation réversible du polymère greffé **PG**.

De préférence, le nombre d'atomes de carbone du groupe R₁ est compris entre 1 et 60, de préférence entre 2 et 50, plus préférentiellement entre 4 et 40, encore plus préférentiellement entre 6 et 25, encore plus préférentiellement entre 8 et 20, encore plus préférentiellement entre 9 et 15, encore plus préférentiellement entre 10 et 12 et le nombre d'atomes de carbone du groupe R₂ est compris entre 1 et 50, de préférence entre 2 et 40, plus préférentiellement entre 4 et 30, encore plus préférentiellement entre 6 et 25, encore plus préférentiellement entre 8 et 20, encore plus préférentiellement entre 9 et 15, encore plus préférentiellement entre 10 et 12.

Les groupes R₁ et R₂ sont de préférence des groupes hydrocarbonés, linéaires et saturés, tels que le nombre total d'atomes de carbone est compris entre 2 et 110, de préférence entre 4 et 90, plus préférentiellement entre 8 et 70, encore plus préférentiellement entre 12 et 50, encore plus préférentiellement entre 16 et 40, encore plus préférentiellement entre 18 et 30, encore plus préférentiellement entre 20 et 24.

Les groupes R₁ et R₂ sont alors respectivement les groupes CₙH₂ₙ et CₘH₂ₘ₊₁ avec n et m, des nombres entiers tels que la somme n + m est comprise entre 2 et 110, de préférence entre 4 et 90, plus préférentiellement entre 8 et 70, encore plus préférentiellement entre 12 et 50, encore plus préférentiellement entre 16 et 40, encore plus préférentiellement entre 18 et 30, encore plus préférentiellement entre 20 et 24.

De préférence, n est compris entre 1 et 60, plus préférentiellement entre 2 et 50, encore plus préférentiellement entre 4 et 40, encore plus préférentiellement entre 6 et 25, encore plus préférentiellement entre 8 et 20, encore plus préférentiellement entre 9 et 15, encore plus préférentiellement entre 10 et 12 et m est compris entre 1 et 50, plus préférentiellement entre 2 et 40, encore plus préférentiellement entre 4 et 30, encore plus préférentiellement entre 6 et 25, encore plus préférentiellement entre 8 et 20, encore plus préférentiellement entre 9 et 15, encore plus préférentiellement entre 10 et 12.

Le polymère greffé **PG**, en plus des parties paraffiniques définies par les groupes R₁ et R₂, possède aussi une fonction notée X. Cette fonction supplémentaire permet de renforcer les interactions entre chaînes de polymère et donc de renforcer la réticulation du polymère greffé **PG**. Cette fonction X induit des interactions thermoréversibles de nature polaire et/ou via des liaisons hydrogène.

La fonction X est choisie parmi les fonctions amide, amido-acide, urée et uréthane. Les fonctions amide, amido-acide, urée et uréthane induisent des interactions via des liaisons hydrogène et des interactions polaires, tandis que les fonctions imide et ester induisent des interactions polaires uniquement.

Selon un mode de réalisation particulier préférentiel, on choisira la fonction X parmi les fonctions amide, amido-acide, urée et uréthane pour induire des interactions à la fois polaires et via des liaisons hydrogène.

Selon la fonction choisie au niveau du groupe X, la formule générale (1) peut s'écrire des façons suivantes, avec X une fonction amide dans les formules générales (1a) et (1b), X une fonction amido-acide dans la formule générale (1c), X une fonction urée dans la formule générale (1g) et X une fonction uréthane dans la formule générale (1h):

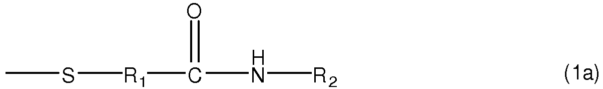

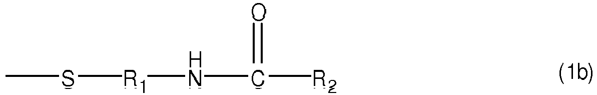

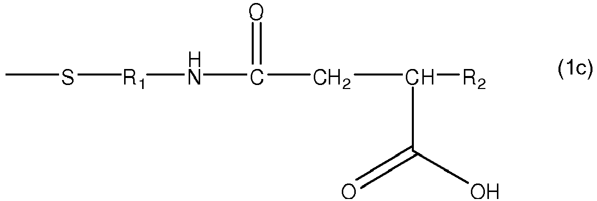

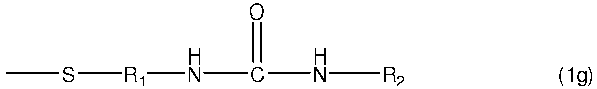

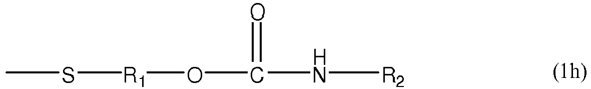

Lorsque X est une fonction amide, celle-ci peut être sous deux formes, soit c'est le carbonyle qui est lié au groupe R₁ (formule 1a), soit il est lié au groupe R₂ (formule 1b). Il en est de même lorsque X est une fonction ester, soit c'est le carbonyle qui est lié au groupe R₁ (formule 1d), soit il est lié au groupe R₂ (formule le).

De préférence, le groupe X est une fonction amide car il peut alors induire deux types d'interactions, polaire et via liaison hydrogène.

Le polymère greffé **PG** préféré est tel que n est égal à 14 et m est égal 18 et peut être représenté comme ceci : **P**-S-C₁₄H₂₈-CONH-C₁₈H₃₇, avec **P** la chaîne polymérique principale relié via l'atome de soufre au greffon qui comprend une fonction X amide, le groupe R₁ C₁₄H₂₈ et le groupe R₂ C₁₈H₃₇.

Le polymère greffé **PG** selon l'invention comprend une chaîne polymérique principale **P**. Cette chaîne polymérique **P** est obtenue par polymérisation de plusieurs monomères. En particulier, cette chaîne polymérique **P** est obtenue par polymérisation de plusieurs monomères comprenant des doubles liaisons. Ces doubles liaisons sont de préférence des doubles liaisons conjuguées.

De préférence, la chaîne polymérique **P** est obtenue par polymérisation de motifs diène conjugué. Les diènes conjugués utilisables selon l'invention sont choisis parmi ceux comportant de 4 à 8 atomes de carbone, tel que le 1-3 butadiène (butadiène), le 2-méthyl-1,3-butadiène (isoprène), le 2,3-diméthyl-1,3-butadiène, le 1,3-pentadiène, le 1,2-hexadiène, le chloroprène, le butadiène carboxylé et/ou l'isoprène carboxylé. De préférence, la chaîne polymérique **P** est obtenue par polymérisation de motifs butadiène.

Le polymère **P** peut ainsi résulter de l'homopolymérisation uniquement de motifs diène, de préférence diène conjugué, de préférence butadiène. Dans ces polymères, le long de la chaîne polymérique, nous pourrons trouver plusieurs doubles liaisons résultant de l'homopolymérisation des motifs diène, de préférence diène conjugué, de préférence butadiène. De tels polymères sont par exemple les polybutadiènes, les polyisoprènes, les polyisobutènes, les polychloroprènes, mais aussi les caoutchoucs butyle qui sont obtenus par concaténation de copolymères d'isobutène et d'isoprène. On pourra aussi trouver des copolymères ou terpolymères obtenus à partir de motifs diène tels que les motifs butadiène, isoprène, isobutène, 2,3-diméthyl-1,3-butadiène, 1,3-pentadiène, 1,3-hexadiène, chloroprène.

En complément de ces motifs diène conjugué, on peut trouver d'autres motifs.

De préférence, la chaîne polymérique **P** est obtenue par copolymérisation de motifs diène conjugué et de motifs hydrocarbure monovinyl aromatique. Les hydrocarbures monovinyls aromatiques utilisables selon l'invention sont choisis parmi le styrène, l'o-méthyl styrène, le p-méthyl styrène, le p-tert-butylstyrène, le 2,3 diméthyl- styrène, l'α-méthyl styrène, le vinyl naphtalène, le vinyl toluène et/ou le vinyl xylène. De préférence, la chaîne polymérique **P** est obtenue par copolymérisation de motifs butadiène et de motifs styrène.

Les polymères utilisables comme matériau de départ pour former les polymères greffés **PG** selon l'invention sont donc, de préférence, choisis parmi les copolymères d'hydrocarbure monovinyl aromatique et de diène conjugué, en particulier de styrène et de butadiène, linéaires ou étoilés, sous forme de dibloc, tribloc et/ou multibranchés, éventuellement avec ou sans charnière statistique.

De préférence le polymère utilisable comme matériau de départ pour former les polymères greffés **PG** selon l'invention est un copolymère dibloc ou tribloc d'hydrocarbure monovinyl aromatique et de diène conjugué, en particulier un copolymère dibloc ou tribloc de styrène et de butadiène.

Le copolymère d'hydrocarbure monovinyl aromatique et de diène conjugué, en particulier de styrène et de butadiène, possède avantageusement une teneur pondérale en hydrocarbure monovinyl aromatique, en particulier en styrène allant de 5% à 50% en masse, par rapport à la masse de copolymère, de préférence de 10% à 40%, plus préférentiellement de 15% à 35%, encore plus préférentiellement de 20% à 30%.

Le copolymère d'hydrocarbure monovinyl aromatique et de diène conjugué, en particulier de styrène et de butadiène, possède avantageusement une teneur pondérale en diène conjugué, en particulier en butadiène allant de 50% à 95% en masse, par rapport à la masse de copolymère, de préférence de 55% à 90%, plus préférentiellement de 60% à 85%, encore plus préférentiellement de 65% à 80%.

Parmi ces motifs diène conjugué, on distingue les motifs à doubles liaisons 1-4 issus du diène conjugué et les motifs à doubles liaisons 1-2 issus du diène conjugué. Par motifs à doubles liaisons 1-4 issus du diène conjugué, on entend les motifs obtenus via une addition 1,4 lors de la polymérisation du diène conjugué. Par motifs à doubles liaisons 1-2 issus du diène conjugué, on entend les motifs obtenus via une addition 1,2 lors de la polymérisation du diène conjugué. Le résultat de cette addition 1,2 est une double liaison vinylique dite « pendante ». Lors de la préparation du polymère greffé **PG**, se sont des doubles liaisons issus du diène conjugué, en particulier les motifs butadiène, qui seront réactifs et disponibles pour le greffage des greffons **G**. Le greffage aura lieu sur les motifs à doubles liaisons 1-4 issus du butadiène et les motifs à doubles liaisons 1-2 issus du butadiène, en particulier sur les motifs à doubles liaisons 1-2 issus du butadiène, un peu plus réactifs.

De préférence, le copolymère d'hydrocarbure monovinyl aromatique et de diène conjugué, en particulier de styrène et de butadiène, possède une teneur en motifs à doubles liaisons 1-2 issus du diène conjugué, en particulier issus du butadiène, comprise entre 5% et 70% en masse, par rapport à la masse totale des motifs diène conjugué, en particulier butadiène, de préférence entre 10% et 60%, plus préférentiellement entre 15% et 50%, encore plus préférentiellement entre 18% et 40%, encore plus préférentiellement entre 20% et 30%, encore plus préférentiellement entre 22% et 25%.

Le copolymère d'hydrocarbure monovinyl aromatique et de diène conjugué, en particulier de styrène et de butadiène, a une masse moléculaire moyenne en poids M_{W} comprise entre 10 000 et 500 000 daltons, de préférence entre 50 000 et 200 000, plus préférentiellement entre 80 000 et 150 000, encore plus préférentiellement entre 100 000 et 130 000, encore plus préférentiellement entre 110 000 et 120 000.

Le copolymère d'hydrocarbure monovinyl aromatique et de diène conjugué, en particulier de styrène et de butadiène, a une masse moléculaire moyenne en nombre Mₙ comprise entre 10 000 et 500 000 daltons, de préférence entre 50 000 et 200 000, plus préférentiellement entre 80 000 et 150 000, encore plus préférentiellement entre 100 000 et 130 000, encore plus préférentiellement entre 110 000 et 120 000. Les masses moléculaires du copolymère sont mesurées par chromatographie GPC avec des étalons polystyrène selon la norme ASTM D3536.

Le copolymère d'hydrocarbure monovinyl aromatique et de diène conjugué, en particulier de styrène et de butadiène, a un indice de polydispersité compris entre 1 et 4, de préférence entre 1,2 et 3, plus préférentiellement entre 1,5 et 2, encore plus préférentiellement entre 1,6 et 1,8.

Les polymères greffés **PG** selon l'invention sont préparés en deux étapes, ce qui permet d'obtenir facilement des polymères greffés **PG** avec des groupes R₁ et R₂ comprenant un grand nombre d'atomes de carbone.

Dans une première étape, il s'agit de greffer sur le polymère **P** tel que défini ci-dessus, en particulier sur un copolymère d'un hydrocarbure monovinyl aromatique et d'un diène conjugué, en particulier sur un copolymère de styrène et de butadiène, un dérivé thiol de formule (2) : HS-R₁-Y avec R₁ ayant les définitions données ci-dessus et Y une fonction choisie parmi les fonctions acide, alcool ou amine.

Ce dérivé thiol va réagir sur les doubles liaisons du polymère **P**, en particulier sur les doubles liaisons issues des motifs diène conjugué du polymère **P**, en particulier sur les doubles liaisons issues des motifs butadiène du polymère **P**. Le dérivé thiol va réagir sur ces doubles liaisons via sa fonction thiol, l'autre extrémité acide, alcool ou amine étant beaucoup moins réactive.

Cette fonction acide, alcool ou amine sera alors libre sur le polymère et disponible pour une deuxième étape réactionnelle. Cette première étape réactionnelle est donc suivie d'une deuxième étape réactionnelle dans laquelle, les fonctions acide, alcool ou amine libres vont réagir avec des dérivés de formule générale (3) : Z-R₂ avec R₂ ayant les définitions données ci-dessus et Z une fonction choisie parmi les fonctions acide, alcool, amine, anhydride ou isocyanate. La réaction entre les groupes Y et Z conduit bien sûr à la formation de la fonction X de la formule générale (1).

Ainsi, le polymère greffé **PG** de formule générale (1a) est obtenu par la réaction entre un dérivé thiol de formule (2) HS-R₁-COOH avec Y une fonction acide et un dérivé de formule générale (3) H₂N-R₂ avec Z une fonction amine, pour former une liaison X qui est une liaison amide. Il s'agit bien sûr de liaisons amides covalentes irréversibles. Afin de favoriser la réaction entre la fonction Y acide et la fonction Z amine, la fonction Y acide peut être préalablement activée par des composés bien connus en chimie organique.

De même, le polymère greffé **PG** de formule générale (1b) est obtenu par la réaction entre un dérivé thiol de formule (2) HS-R₁-NH₂ avec Y une fonction amine et un dérivé de formule générale (3) HOOC-R₂ avec Z une fonction acide, pour former une liaison X qui est une liaison amide, irréversible de type covalente. Afin de favoriser la réaction entre la fonction Y amine et la fonction Z acide, la fonction acide peut être préalablement activée par des composés bien connus en chimie organique. On peut ainsi par exemple, faire réagir le chlorure d'acide ClCO-R₂ associé à l'acide HOOC-R₂.

Le polymère greffé **PG** de formule générale (1c) est obtenu par la réaction entre un dérivé thiol de formule (2) HS-R₁-NH₂ avec Y une fonction amine et un dérivé de formule générale (3) avec Z une fonction anhydride cyclique pour former une liaison X qui est une liaison amido/acide :

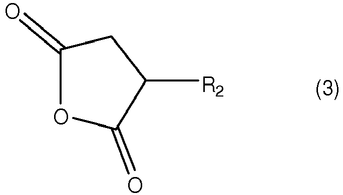

A partir du polymère greffé **PG** de formule générale (1c), on peut obtenir le polymère greffé de formule générale (1f). Une réaction de cyclisation interne a lieu sous certaines conditions de températures, en particulier à température élevée.

Le polymère greffé **PG** de formule générale (1d) est obtenu par la réaction entre un dérivé thiol de formule (2) HS-R₁-COOH avec Y une fonction acide et un dérivé de formule générale (3) HO-R₂ avec Z une fonction alcool, pour former une liaison X qui est une liaison ester.

Le polymère greffé **PG** de formule générale (le) est obtenu par la réaction entre un dérivé thiol de formule (2) HS-R₁-OH avec Y une fonction alcool et un dérivé de formule générale (3) HOOC-R₂ avec Z une fonction acide, pour former une liaison X qui est une liaison ester. Afin de favoriser la formation de la liaison ester, on pourrait aussi faire réagir le chlorure d'acide ClCO-R₂ associé à l'acide HOOC-R₂.

Le polymère greffé **PG** de formule générale (1g) est obtenu par la réaction entre un dérivé thiol de formule (2) HS-R₁-NH₂ avec Y une fonction amine et un dérivé de formule générale (3) OCN-R₂ avec Z une fonction isocyanate, pour former une liaison X qui est une liaison urée.

Le polymère greffé **PG** de formule générale (1h) est obtenu par la réaction entre un dérivé thiol de formule (2) HS-R₁-OH avec Y une fonction alcool et un dérivé de formule générale (3) OCN-R₂ avec Z une fonction isocyanate, pour former une liaison X qui est une liaison uréthane.

La première étape réactionnelle fait intervenir le polymère **P** tel que défini ci-dessus et le dérivé thiol de formule (2) tel que défini ci-dessus. Le polymère **P** et le dérivé thiol de formule (2) sont mis en réaction à une température comprise entre 20 et 200°C, de préférence entre 40 et 180°C, plus préférentiellement entre 60 et 140°C, encore plus préférentiellement entre 80 et 120°C.

Le polymère **P** et le dérivé thiol de formule (2) sont mis en réaction pendant une durée de 10 minutes à 48 heures, de préférence de 30 minutes à 24 heures, plus préférentiellement de 1 heure à 10 heures, encore plus préférentiellement de 2 heures à 4 heures.

Le rapport massique entre les quantités de dérivé thiol de formule (2) et de polymère **P** est compris entre 0,01 et 5, de préférence entre 0,05 et 4, plus préférentiellement entre 0,1 et 2, encore plus préférentiellement entre 0,5 et 1,5, encore plus préférentiellement entre 0,8 et 1.

Le rapport molaire entre les quantités de dérivé thiol de formule (2) et de motifs issus du diène conjugué du polymère **P**, de préférence de motifs 1-2 issus du diène conjugué du polymère **P**, est compris entre 0,01 et 5, de préférence entre 0,05 et 4, plus préférentiellement entre 0,1 et 2, encore plus préférentiellement entre 0,5 et 1,5, encore plus préférentiellement entre 0,8 et 1.

La réaction entre le polymère **P** et le dérivé thiol de formule (2) se fait de préférence dans un solvant tel que le toluène, mais on pourra aussi effectuer le mélange de ces deux réactifs sans solvant organique, le mélange des deux réactifs se faisant dans le polymère **P** chauffé aux températures mentionnées ci-dessus.

Pour favoriser la réaction entre le polymère **P** et le dérivé thiol de formule (2), on peut éventuellement ajouter un initiateur radicalaire. Cet initiateur radicalaire est de préférence de l'azobisisobutyronitrile (AIBN). En optimisant les conditions de température et de durée, on peut se passer d'initiateur radicalaire.

On pourra aussi éventuellement utiliser une atmosphère inerte pour cette première étape réactionnelle, telle qu'une atmosphère inerte d'azote, ou d'argon.

La première étape réactionnelle peut être effectuée avec ou sans agitation mécanique. On peut améliorer le greffage du dérivé thiol de formule (2) en utilisant une agitation mécanique quelconque.

On peut éventuellement purifier le produit de réaction entre le polymère **P** et le dérivé thiol de formule (2) par précipitation dans un solvant tel que le méthanol.

On peut éventuellement ajouter au produit de réaction entre le polymère **P** et le dérivé thiol de formule (2), un agent anti-oxydant, tel que le 2,6-di-tert-butyl-4-méthylphénol. Cet agent anti-oxydant pourra être ajouté avec du solvant tel que le toluène, solvant qui est ensuite évaporé.

Lors de cette première étape réactionnelle de greffage, il peut se produire des coupures de chaînes et/ou des ramifications de chaînes au niveau de la chaîne polymérique. Il peut en résulter un couplage, une ramification, une réticulation partielle des chaînes polymériques de nature covalente, irréversible, qui s'ajouterait à la réticulation thermique réversible due aux groupes R₁, R₂ et/ou X. Ce phénomène est mineur, c'est la réticulation thermique réversible qui prédomine.

La deuxième étape réactionnelle fait intervenir le produit de réaction entre le polymère **P** et le dérivé de formule (2), c'est-à-dire le produit de réaction de la première étape, et un dérivé de formule (3) tel que défini ci-dessus.

Le produit de réaction de la première étape et le dérivé de formule (3) sont mis en réaction à une température comprise entre 0 et 200°C, de préférence entre 10 et 180°C, plus préférentiellement entre 20 et 140°C, encore plus préférentiellement entre 40 et 120°C, encore plus préférentiellement entre 80 et 100°C.

Le produit de réaction de la première étape et le dérivé de formule (3) sont mis en réaction pendant une durée de 10 minutes à 48 heures, de préférence de 30 minutes à 24 heures, plus préférentiellement de 1 heure à 10 heures, encore plus préférentiellement de 2 heures à 4 heures.

La réaction entre le produit de réaction de la première étape et le dérivé de formule (3) se fait de préférence dans un solvant tel que le toluène.

Pour synthétiser le polymère greffé **PG** de formule générale (1a), pour activer les fonctions acides présentes sur le produit de réaction de la première étape, on ajoute de préférence un activateur tel qu'un mélange de N-hydroxysuccinimide et de dicyclohexylcarbodiimide, tout autre activateur classiquement utilisé en chimie peptidique peut être utilisé. Ce n'est qu'après cette activation, qu'on ajoute le dérivé de formule (3) pour former la liaison amide.

On pourra aussi éventuellement utiliser une atmosphère inerte pour cette deuxième étape réactionnelle, telle qu'une atmosphère inerte d'azote, ou d'argon.

La deuxième étape réactionnelle peut être effectuée avec ou sans agitation mécanique. On peut améliorer le greffage du dérivé de formule (3) en utilisant une agitation mécanique quelconque.

On peut éventuellement purifier le produit de la deuxième étape réactionnelle par précipitation dans un solvant tel que le méthanol.

On peut éventuellement ajouter au produit deuxième étape réactionnelle, un agent anti-oxydant, tel que le 2,6-di-tert-butyl-4-méthylphénol. Cet agent anti-oxydant pourra être ajouté avec du solvant tel que le toluène, solvant qui est ensuite évaporé.

Les polymères greffés **PG** selon l'invention trouvent des applications dans de nombreux domaines, et en particulier dans des additifs pour contrôler et améliorer la viscosité et la fluidité de formulations, des additifs pour modifier l'aspect gel de solutions organiques, des additifs de rhéologie et/ou d'adhésion pour des revêtements sur différents types de surface, des additifs pour faire varier la fluidité des peintures, des additifs dans la formulation des bitumes non modifiés et des bitumes modifiés, des additifs dans la formulation des ciments ou de matériaux de construction, des additifs dans la formulation du caoutchouc, des additifs anticorrosion, des additifs dans le domaine du textile, du tissu et du papier, des additifs pour la modification choc dans des polymères, des additifs pour les colles, les formulations adhésives, des additifs pour des lubrifiants, des additifs dans des formulations cosmétiques, des additifs dans des encres, des additifs dans des matériaux photographiques, des additifs pour matériaux pour des circuits imprimés.

L'invention a donc encore pour objet des compositions bitume/polymère comprenant les polymères greffés **PG** selon l'invention.

Les compositions bitume/polymère comprennent de 0,1 à 40% en masse de polymères greffés **PG**, par rapport à la masse des compositions bitume/polymère, de préférence de 0,5 à 30%, plus préférentiellement de 1 à 20%, encore plus préférentiellement de 2 à 10%, encore plus préférentiellement de 3 à 5%.

Le bitume utilisable selon l'invention peut être un bitume issu de différentes origines. Le bitume utilisable selon l'invention peut être choisi parmi les bitumes d'origine naturelle, comme ceux contenus dans des gisements de bitume naturel, d'asphalte naturel ou les sables bitumineux. Le bitume utilisable selon l'invention peut aussi être un bitume ou un mélange de bitumes provenant du raffinage du pétrole brut tels que des bitumes de distillation directe ou des bitumes de distillation sous pression réduite ou encore des bitumes soufflés ou semi-soufflés, des résidus de désasphaltage au propane ou au pentane, des résidus de viscoréduction, ces différentes coupes pouvant être prises seules ou en mélange. Les bitumes utilisés peuvent également être des bitumes fluxés par addition de solvants volatils, de fluxants d'origine pétrolière, de fluxants carbochimiques et/ou de fluxants d'origine végétale. On peut aussi utiliser des bitumes synthétiques également appelés bitumes clairs, pigmentables ou colorables. Le bitume peut être un bitume d'origine naphténique ou paraffinique, ou un mélange de ces deux bitumes. On préfère les bitumes d'origine paraffinique.

Les autres polymères présents éventuellement dans les compositions bitume/polymère sont les polymères classiquement utilisables dans le domaine des compositions bitume/polymère comme par exemple, les copolymères triblocs d'un bloc hydrocarbure monovinyl aromatique et d'un bloc diène conjugué tels que les copolymères triblocs styrène/butadiène/styrène SBS, les copolymères blocs hydrocarbure monovinyl aromatique et d'un bloc diène conjugué multibranchés, tels que les copolymères blocs multibranchés styrène/butadiène (SB)ₙX, les copolymères d'un bloc hydrocarbure monovinyl aromatique et d'un bloc diène conjugué « random » tels que les copolymères styrène/butadiène rubber SBR, les polybutadiènes, les polyisoprènes, les poudrettes de caoutchouc issues du recyclage des pneumatiques, les caoutchoucs butyle, les polyacrylates, les polyméthacrylates, les polychloroprènes, les polynorbornènes, les polybutènes, les polyisobutènes, les polyoléfines telles que les polyéthylènes, les polypropylènes, les copolymères d'éthylène et d'acétate de vinyle, les copolymères d'éthylène et d'acrylate de méthyle, les copolymères d'éthylène et d'acrylate de butyle, les copolymères d'éthylène et d'anhydride maléique, les copolymères d'éthylène et de métacrylate de glycidyle, les copolymères d'éthylène et d'acrylate de glycidyle, les copolymères d'éthylène et de propène, les terpolymères éthylène/propène/diène (EPDM), les terpolymères acrylonitrile/butadiène/styrène (ABS), les terpolymères éthylène/acrylate ou méthacrylate d'alkyle/acrylate ou méthacrylate de glycidyle et notamment les terpolymères éthylène/acrylate de méthyle/méthacrylate de glycidyle et les terpolymères éthylène /acrylate ou méthacrylate d'alkyle/anhydride maléique et notamment les terpolymères éthylène/acrylate de butyle/anhydride maléique.

En complément du bitume et des polymères greffés, d'autres ingrédients optionnels communément utilisés dans les bitumes peuvent être présents. Ces ingrédients pourront être des fluxants tels que des huiles à base de matières grasses animales et/ou végétales ou des huiles hydrocarbonées d'origine pétrolière. Les huiles d'origine animale et/ou végétale pourront être sous forme d'acides gras libres, de triglycérides, de diglycérides, de monoglycérides, sous forme estérifiée, par exemple sous forme d'ester méthylique.

Ces ingrédients pourront être des cires d'origine animale, végétale ou d'hydrocarbures, en particulier des cires hydrocarbonées à chaîne longue, par exemple des cires de polyéthylène ou des cires Fischer-Trospch. Les cires de polyéthylène ou les cires Fischer-Trospch pourront éventuellement être oxydées. Les cires amides grasses telles que l'éthylène bis-stéaramide pourront aussi être ajoutées.

Ces ingrédients pourront être des résines d'origine végétale telles que les colophanes.

Ces ingrédients pourront être des acides tels que l'acide polyphosphorique ou des diacides, en particuliers des diacides gras.

Ces ingrédients pourront être des dopes d'adhésivité et/ou des agents tensioactifs. Ils sont choisis parmi les dérivés d'alkylamines, les dérivés d'alkyl-polyamines, les dérivés d'alkylamidopolyamines, les dérivés d'alkyl amidopolyamines et les dérivés de sels d'ammonium quaternaire, pris seuls ou en mélange. Les plus utilisés sont les propylènes-diamines de suif, les amido-amines de suif, les ammoniums quaternaires obtenus par quaternisation des propylènes-diamines de suif, les propylènes-polyamines de suif.

Les compositions bitume/polymère sont préparées par mélange du polymère greffé **PG** et du bitume. Le mélange a lieu à une température comprise entre 80°C et 200°C, de préférence entre 100°C et 180°C, plus préférentiellement entre 120°C et 160°C, pendant une durée de 30 minutes à 4 heures, de préférence de 1 heure à 2 heures, éventuellement sous agitation.

Les polymères greffés **PG** sont utilisables dans le domaine des bitumes, en application routière et/ou industrielle. Les polymères greffés **PG** permettent de formuler des compositions bitumineuses et en particulier des compositions bitume/polymère réticulées, de préférence de manière thermoréversible.

La réticulation des compositions bitume/polymère comprenant lesdits polymères greffés peut être mise en évidence en effectuant sur ces compositions bitume/polymère, des tests de traction selon la norme NF EN 13587. Les compositions bitume/polymère réticulées ont une résistance à la traction plus élevée que les compositions bitume/polymère non réticulées.

Une résistance à la traction plus élevée se traduit par un allongement à la rupture ou élongation maximale (ε max en %) élevée, une contrainte à la rupture ou contrainte à l'élongation maximale (σ ε max en MPa) élevée, une énergie conventionnelle à 400% (E 400% en J/cm²) élevée et/ou une énergie totale (E totale en J) élevée.

Les compositions bitume/polymère réticulées ont une élongation maximale, selon la norme NF EN 13587, supérieure ou égale à 400%, de préférence supérieure ou égale à 500%, plus préférentiellement supérieure ou égale à 600%, encore plus préférentiellement supérieure ou égale à 700%.

Les compositions bitume/polymère réticulées ont une contrainte à l'élongation maximale, selon la norme NF EN 13587, supérieure ou égale à 0,2 MPa, de préférence supérieure ou égale à 0,4 MPa, plus préférentiellement supérieure ou égale à 0,6 MPa, encore plus préférentiellement supérieure ou égale à 1 MPa.

Les compositions bitume/polymère réticulées ont une énergie conventionnelle à 400%, selon la norme NF EN 13587, supérieure ou égale à 3 J/cm², de préférence supérieure ou égale à 5 J/cm², plus préférentiellement supérieure ou égale à 10 J/cm², encore plus préférentiellement supérieure ou égale à 15 J/cm².

Les compositions bitume/polymère réticulées ont une énergie totale, selon la norme NF EN 13587, supérieure ou égale à 1 J, de préférence supérieure ou égale à 2 J, plus préférentiellement supérieure ou égale à 4 J, encore plus préférentiellement supérieure ou égale à 5 J.

Les compositions bitume/polymère comprenant les polymères greffés **PG** peuvent être destinés à la fabrication d'enrobés, d'enduits superficiels (applications routières) ou de membranes, chapes d'étanchéité (applications industrielles).

L'enrobé bitumineux comprend de 1 à 10 % en masse de composition bitume/polymère, par rapport à la masse totale de l'enrobé, de préférence de 4 à 8% en masse.

L'utilisation de polymères greffés **PG** dans les compositions bitume/polymère, lors de la fabrication d'un enrobé, permet de diminuer les températures de fabrication ou d'enrobage, de répandage et/ou de compactage par rapport aux températures utilisées habituellement. En effet grâce à une réticulation thermoréversible, les compositions bitume/polymère présentent à la fois des viscosités réduites dans les domaines de températures de fabrication d'un enrobé (températures de mise en oeuvre) par une disparition des domaines cristallins dus aux groupes R₁ et R₂ et des interactions polaires ou via liaisons hydrogène dues à la fonction X du polymère **PG** et en même temps le retour de ces domaines cristallins et de ces interactions lorsque les températures diminuent et par conséquent de bonne propriétés mécaniques aux températures d'usage (consistance, élasticité par exemple).

### EXEMPLES

### Exemple 1 :

### Préparation d'un polymère P-S-C₁₄H₂₈-CONH-C₁₈H₃₇ - 6.5%molaire

On prépare le polymère greffé **PG** de type P-S-R₁-X-R₂ selon l'invention de formule générale : P-S-C₁₄H₂₈-CONH-C₁₈H₃₇ avec P la chaîne polymérique, R₁ qui représente le groupe C₁₄H₂₈, R₂ qui représente le groupe C₁₈H₃₇ et X qui représente une fonction amide.

Ce polymère greffé est préparé à partir de:
- copolymère triséquencé styrène/butadiène/styrène SBS ayant une masse M_{w} égale à 122 000 g.mol⁻¹, une masse Mₙ égale à 115 000 g.mol⁻¹, un indice de polydispersité égal à 1,06, une quantité en masse de styrène de 30,4%, une quantité en masse de butadiène 1,2 de 26,6%, une quantité en masse de butadiène 1,4 de 43%, par rapport à la masse du copolymère.
- dérivé thiol/acide de formule (2) : HS-C₁₄H₂₈-COOH,
- dérivé amine de formule (3) : H₂N-C₁₈H₃₇.

### Préparation du polymère greffé PG selon l'invention

Le polymère greffé **PG** est synthétisé en deux étapes. La première étape correspond à une addition radicalaire d'un alcanethiol comportant une fonction acide carboxylique (acide mercaptoalcanoïque). La deuxième étape correspond à l'amidification des fonctions acides avec un dérivé amine.

### Première étape

Dans un réacteur, maintenu sous atmosphère d'azote, et à température ambiante, on introduit 110 ml de toluène et 4 g de polymère SBS décrit ci-dessus. On introduit ensuite dans le réacteur 2,6 g de dérivé thiol/acide décrit ci-dessus. Le mélange est porté à 90°C et on ajoute 15 mg d'AIBN (azobisisobutyronitrile) solubilisé dans 1 ml de toluène dégazé. Après 3 heures et 30 minutes à 90°C, sous atmosphère inerte, la solution est refroidie jusqu'à température ambiante. Le polymère est précipité trois fois dans le méthanol. Le polymère est ensuite solubilisé dans du toluène et on ajoute du 2,6-di-tert-butyl-4-méthylphénol (1 mg pour 1 g de polymère). La solution est versée dans un moule en téflon et le toluène est évaporé. Les films de polymère sont séchés sous-vide pendant 24 heures et conservés à 4°C.

Le % molaire de dérivé thiol/acide greffé, par rapport aux motifs butadiène est de 12%. Ce % molaire de dérivé thiol/acide greffé est le nombre de moles de dérivé thiol/acide greffé par rapport au nombre de moles des motifs butadiène présents sur la chaîne polymérique de départ.

Le % molaire de dérivé thiol/acide greffé, par rapport aux motifs butadiène et aux motifs styrène est de 10%. Ce % molaire de dérivé thiol/acide greffé est le nombre de moles de dérivé thiol/acide greffé par rapport au nombre de moles des motifs butadiène et des motifs styrène présents sur la chaîne polymérique de départ.

Le % massique de dérivé thiol/acide greffé est de 32%. Ce % massique de dérivé thiol/acide greffé est la masse de dérivé thiol/acide greffé par rapport à la masse totale de polymère greffé obtenu dans la première étape réactionnelle.

Le rendement de greffage de la première étape de réaction est de 65%. On définit par rendement de greffage, la quantité de dérivé thiol/acide greffé par rapport à la quantité de dérivé thiol/acide introduit dans cette première étape.

### Deuxième étape

A température ambiante et sous agitation, on solubilise 3 g du polymère obtenu lors de la première étape de réaction dans 90 ml de toluène. On introduit ensuite 0,8 g de N-hydroxysuccinimide. On met en solution dans 1 ml de toluène, 0,46 g de dicyclohexylcarbodiimide, qui est ensuite ajouté goutte à goutte dans le milieu réactionnel. Le mélange est agité à température ambiante pendant 5 heures. On introduit ensuite 1,06 g de dérivé amine décrit ci-dessus préalablement mis en solution dans 1 ml de toluène, puis on laisse réagir pendant 10 heures. Le mélange est précipité 2 fois dans du méthanol. Le polymère greffé **PG** obtenu, est ensuite solubilisé dans du toluène et on ajoute du 2,6-di-tert-butyl-4-méthylphénol (1 mg pour 1 g de polymère). La solution est versée dans un moule en téflon et le toluène est évaporé. Les films de polymère sont séchés sous-vide pendant 24 heures et conservés à 4°C.

Le % molaire de dérivé thiol/amide greffé, par rapport aux motifs butadiène est de 8,1%. Ce % molaire de dérivé thiol/amide greffé est le nombre de moles de dérivé thiol/amide greffé par rapport au nombre de moles des motifs butadiène présents sur la chaîne polymérique de départ.

Le % molaire de dérivé thiol/amide greffé, par rapport aux motifs butadiène et aux motifs styrène est de 6,5%. Ce % molaire de dérivé thiol/amide greffé est la quantité de dérivé thiol/amide greffé par rapport au nombre de moles des motifs butadiène et des motifs styrène présents sur la chaîne polymérique de départ.

Le % massique de dérivé thiol/amide greffé est de 32%. Ce % massique de dérivé thiol/amide greffé est la masse de dérivé thiol/amide greffé par rapport à la masse totale de polymère greffé obtenu dans la seconde étape réactionnelle.

Le rendement de greffage de la deuxième étape de réaction est de 65%. On définit par rendement de greffage, la quantité de dérivé amine greffé par rapport à la quantité de dérivé amine introduit dans cette deuxième étape.

### Propriétés du polymère greffé PG

Les propriétés viscoélastiques du polymère greffé **PG**, et en particulier la formation d'un gel dans une solution à 10% en masse dans le toluène, on été étudiées en mesurant les modules G' (module de conservation) et G" (module de perte) sous refroidissement et chauffage (entre 25°C et - 8°C à 0,5°C/min sous une fréquence de 0,9 rad.s⁻¹ et à une déformation de 1%).

Les résultats sont rassemblés dans le Tableau I ci-dessous.

**Tableau I**

| Température (°C) | G' (Pa) Refroidissement | G" (Pa) Refroidissement | G' (Pa) Chauffage | G" (Pa) Chauffage |
|---|---|---|---|---|
| -8 | 54000 | 1240 | 54000 | 1240 |
| -6 | 41500 | 990 | 52900 | 1180 |
| -4 | 35400 | 830 | 50100 | 1100 |
| -2 | 28600 | 660 | 48400 | 1020 |
| 0 | 21500 | 470 | 42800 | 840 |
| 2 | 14000 | 300 | 41100 | 810 |
| 4 | 6640 | 160 | 33600 | 630 |
| 7 | 590 | 20 | 26700 | 470 |
| 10 | 4 | 1 | 19000 | 310 |
| 11 | 0,3 | 0,4 | 18700 | 290 |
| 13 | - | - | 11100 | 170 |
| 16 | - | - | 4290 | 60 |
| 19 | - | - | 634 | 11 |
| 22 | - | - | 1,5 | 0,5 |
| 25 | - | - | - | - |

A température ambiante (20-25°C), la solution de polymère **PG** est très liquide. Lors du refroidissement, à partir de 10°C, les valeurs des modules G' et G" augmentent très fortement avec des valeurs de module G' très supérieures à celles du module G", ce qui montre la formation d'un gel avec une forte composante élastique. Le polymère greffé **PG** est donc capable de former un gel en solution. La gélification a lieu autour de 10°C lors du refroidissement. Ce gel disparaît lorsque l'on chauffe autour de 22°C, ce qui montre la thermoréversibilité du système.

Les viscosités du polymère greffé **PG** (10% massique dans du toluène) sont aussi mesurées. Les mesures en écoulement ne peuvent pas être effectuées en fonction de la température car le gel formé par le polymère greffé **PG** est tellement fort qu'on risque de le fracturer en le sollicitant de cette façon. C'est pour cela que seules des mesures en oscillation (mesures de modules G' et G") sont effectuées en température. Ces mesures donnent accès à une viscosité complexe η* (η*=G*/ω avec G* le module complexe).

Les résultats sont rassemblés dans le Tableau II ci-dessous.

**Tableau II**

| Température (°C) | Viscosité (Pa.s) |
|---|---|
| 25 | 0,098 |
| 20 | 0,415 |
| 15 | 0,752 |
| 10 | 501 |
| 5 | 1290 |
| 0 | 2200 |
| -5 | 3140 |
| -8 | 3950 |
| -10 | - |

On constate une brutale augmentation de la viscosité à partir de 10°C. Ces mesures de viscosité sont bien corrélées avec les mesures de module G' et G" qui montrent que le polymère greffé **PG** est capable de former un gel thermoréversible dans le toluène autour de 10°C.

### Exemple 2 :

### Préparation d'un polymère P-S-C₁₄H₂₈-CONH-C₁₈H₃₇ - 1.5%molaire

Un polymère greffé PG de type P-S-C₁₄H₂₈-CONH-C₁₈H₃₇ selon l'invention est synthétisé selon un mode opératoire identique à l'exemple 1, à l'exception des quantités du dérivé thiol/acide de formule (2) et du dérivé amine de formule (3) ainsi que des quantités d'AIBN, de N-hydroxysuccinimide et de dicyclohexylcarbodiimide ajustées de manière à obtenir un % molaire du dérivé thiol/amide greffé par rapport aux motifs butadiène et aux motifs styrène de 1.5%.

### Première étape

On utilise 0.64 g du dérivé thiol/acide de formule (2) et 3.85 mg d'AIBN, les quantités des autres composants restant identiques à l'exemple 1.

On obtient alors un % molaire de dérivé thiol/acide greffé, par rapport aux motifs butadiène de 2% et un % molaire de dérivé thiol/acide greffé, par rapport aux motifs butadiène et aux motifs styrène est de 1.5%. Le % massique de dérivé thiol/acide greffé est de 6% et le rendement de greffage de la première étape de réaction est de 40%.

### Deuxième étape

On utilise 83 mg de N-hydroxysuccinimide, 0.15 g de dicyclohexylcarbodiimide et 0.19 g de dérivé amine de formule (3), les quantités des autres composants restant identiques à l'exemple 1.

Le % molaire de dérivé thiol/amide greffé, par rapport aux motifs butadiène est de 2% et le % molaire de dérivé thiol/amide greffé, par rapport aux motifs butadiène et aux motifs styrène est de 1,5%.

Le % massique de dérivé thiol/amide greffé est de 11%. Le rendement de greffage de la deuxième étape de réaction est de 100%.

### Exemple 3 :

### Préparation d'une composition bitume/polymère

### Bitume:

Le bitume est un bitume de pénétrabilité 50 1/10mm dont les caractéristiques répondent à la norme NF EN 1426

### Composition bitume/polymère C selon l'invention :

Une composition bitume/polymère est réalisée à partir du bitume décrit ci-dessus et du polymère greffé PG de formule P-S-C₁₄H₂₈-CONH-C₁₈H₃₇ de l'exemple 2 à une concentration de 5% massique.

On introduit le bitume décrit ci-dessus dans un réacteur maintenu à 180°C et équipé d'un système d'agitation mécanique. Le bitume est chauffé à 180°C et agité pendant environ 60 minutes. On ajoute ensuite le polymère greffé PG de formule P-S-C₁₄H₂₈-CONH-C₁₈H₃₇ à 5% massique. Le mélange s'effectue pendant une durée de 4 heures sous agitation.

### Composition bitume/polymère témoin T₁

On prépare une composition bitume/polymère témoin non réticulée de la manière suivante :
On introduit le bitume décrit ci-dessus dans un réacteur. Le bitume est chauffé à 180°C et agité pendant environ 60 minutes. On ajoute ensuite 5% massique du copolymère triséquencé styrène/butadiène/styrène SBS décrit dans l'exemple 1. Le mélange est agité et chauffé à 180°C pendant environ 4 heures.

### Composition bitume/polymère témoin T₂

On prépare également une composition bitume/polymère témoin réticulée de manière irréversible de la manière suivante :
On réalise une composition bitume/polymère témoin T₁ tel que décrit ci-dessus à laquelle on ajoute 0.13% massique de soufre. Le mélange ainsi obtenu est agité et chauffé à 180°C pendant 1h30.

Le Tableau ci-après présente les caractéristiques physiques des compositions C, T₁ et T₂.

**Résultats**

| | **C** | **T₁** | **T₂** |
|---|---|---|---|
| Pénétrabilité (0,1 mm) (1) | 36 | 52 | 36 |
| TBA (°C) (2) | 62,6 | 56,2 | 64,2 |
| Viscosité à 80°C | 80,85 | 37,00 | 65,00 |
| Viscosité à 100°C | 12,26 | 14,36 | 17,49 |
| Viscosité à 120°C | 4,01 | 3,91 | 4,80 |
| Viscosité à 140°C | 1,19 | 1,30 | 1,61 |
| Viscosité à 160°C | 0,46 | 0,55 | 0,69 |
| Viscosité à 180°C | 0,23 | 0,28 | 0,34 |
| Viscosité à 200°C | 0,14 | 0,17 | 0,20 |
| Elongation max. à 5°C (%) (3) | 700 | 95 | 700 |
| Contrainte (daN/cm²) (3) | 16,34 | / | 12,01 |

| | | | |
|---|---|---|---|
| (1) Selon la norme EN 1426 (2) Température Bille et Anneau, selon la norme EN1427 (3) Test de traction à 5°C, selon la norme NF T 66-038, avec une vitesse d'étirement de 100 mm/min. | | | |

Les résultats de ce tableau montrent que la composition bitume/polymère selon l'invention est moins visqueuse à partir de 100°C que les compositions bitume/polymère T₁ non réticulée et T₂ réticulée au soufre. De plus, on constate qu'aux températures d'usage, les propriétés élastiques et d'élongation de la composition bitume/polymère selon l'invention sont améliorées par rapport à une composition bitume/polymère T₁ non réticulée et comparables à celles de la composition bitume/polymère T₂ réticulée au soufre. On observe donc un effet thermoréversible.

## Revendications

1. Polymère greffé **PG** comprenant une chaîne principale polymérique **P** et au moins un greffon latéral **G** relié à la chaîne principale polymérique **P**, le greffon **G** ayant pour formule générale (1) :
-S-R₁-X-R₂ (1)
avec R₁ et R₂ qui représentent indépendamment l'un de l'autre, des groupes hydrocarbonés, linéaires ou ramifiés, insaturés ou saturés tels que le nombre total d'atomes de carbone des groupes R₁ et R₂ est compris entre 2 et 110, X qui représente une fonction amide, amido-acide, urée ou uréthane, ledit greffon **G** étant relié à la chaîne principale polymérique **P** par l'intermédiaire de l'atome de soufre.

2. Polymère greffé selon la revendication 1 dans lequel le nombre total d'atomes de carbone des groupes R₁ et R₂ est compris entre 4 et 90, de préférence entre 8 et 70, plus préférentiellement entre 12 et 50, encore plus préférentiellement entre 16 et 40, encore plus préférentiellement entre 18 et 30, encore plus préférentiellement entre 20 et 24.

3. Polymère greffé selon la revendication 1 ou 2 dans lequel R₁ représente un groupe hydrocarboné, linéaire, saturé de formule CₙH₂ₙ et R₂ représente un groupe hydrocarboné, linéaire, saturé de formule CₘH₂ₘ₊₁ avec n et m des nombres entiers tels que la somme n + m est comprise entre 2 et 110.

4. Polymère greffé selon la revendication 3 dans lequel n est compris entre 1 et 60, de préférence entre 2 et 50, plus préférentiellement entre 4 et 40, encore plus préférentiellement entre 6 et 25, encore plus préférentiellement entre 8 et 20, encore plus préférentiellement entre 9 et 15, encore plus préférentiellement entre 10 et 12 et m est compris entre 1 et 50, de préférence entre 2 et 40, plus préférentiellement entre 4 et 30, encore plus préférentiellement entre 6 et 25, encore plus préférentiellement entre 8 et 20, encore plus préférentiellement entre 9 et 15, encore plus préférentiellement entre 10 et 12.

5. Polymère greffé selon l'une quelconque des revendications 1 à 4 dans lequel la chaîne principale polymérique **P** résulte de la copolymérisation de motifs diène conjugué et de motifs hydrocarbure monovinyl aromatique, en particulier de la copolymérisation de motifs butadiène et de motifs styrène.

6. Polymère greffé selon la revendication 5 comprenant une teneur en motifs à doubles liaisons 1-2 issus du diène conjugué, en particulier de butadiène, comprise entre 5% et 70% en masse, par rapport à la masse totale des motifs diène conjugué, en particulier de butadiène, de préférence entre 10% et 60%, plus préférentiellement entre 15% et 50%, encore plus préférentiellement entre 18% et 40%, encore plus préférentiellement entre 20% et 30%, encore plus préférentiellement entre 22% et 25%.

7. Polymère greffé selon l'une quelconque des revendications 1 à 6 de dans lequel X représente une fonction amide et la formule générale (1) s'écrit :

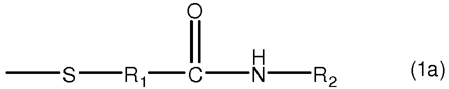

8. Procédé de préparation du polymère greffé selon l'une quelconque des revendications 1 à 7, dans lequel on fait réagir dans une première étape, au moins un polymère **P** et au moins un dérivé thiol de formule générale (2) : HS-R₁-Y, puis dans une deuxième étape au moins un dérivé de formule générale (3) : Z-R₂, avec R₁ et R₂ qui représentent indépendamment l'un de l'autre, des groupes hydrocarbonés, linéaires ou ramifiés, insaturés ou saturés tels que le nombre total d'atomes de carbone des groupes R₁ et R₂ est compris entre 2 et 110, Y qui représente une fonction acide, alcool ou amine, Z qui représente une fonction acide, alcool, amine, anhydride ou isocyanate, étant entendu que la réaction entre les deux fonctions Y et Z conduit à la fonction X de la formule générale (1).

9. Utilisation du polymère greffé **PG** selon l'une quelconque des revendications 1 à 7 dans des revêtements, des peintures, des thermoplastiques, des colles, des lubrifiants, des carburants, des encres, des ciments, des matériaux de construction, des caoutchoucs ou des bitumes.

10. Composition bitume/polymère comprenant au moins un bitume et au moins un polymère greffé **PG** selon l'une quelconque des revendications 1 à 7.

11. Composition bitume/polymère selon la revendication 10 comprenant de 0,1 à 40% en masse de polymère greffé **PG**, par rapport à la masse de la composition bitume/polymère, de préférence de 0,5 à 30%, plus préférentiellement de 1 à 20%, encore plus préférentiellement de 2 à 10%, encore plus préférentiellement de 3 à 5%.

12. Procédé de préparation de la composition bitume/polymère selon la revendication 10 ou 11 dans lequel on mélange au moins un bitume et au moins un polymère greffé **PG** selon l'une quelconque des revendications 1 à 7, à une température comprise entre 80°C et 200°C, de préférence entre 100°C et 180°C, plus préférentiellement entre 120°C et 160°C, pendant une durée de 30 minutes à 4 heures, de préférence de 1 heure à 2 heures.

13. Utilisation du polymère greffé **PG** selon l'une quelconque des revendications 1 à 7 dans une composition bitume/polymère pour réticuler de manière thermoréversible ladite composition bitume/polymère.

14. Enrobé bitumineux comprenant une composition bitume/polymère selon la revendication 10 ou 11 et des granulats comprenant éventuellement des fines, du sable, des gravillons.

15. Utilisation du polymère greffé **PG** selon l'une quelconque des revendications 1 à 7 pour diminuer les températures d'enrobage, de répandage et/ou de compactage lors de la fabrication d'un enrobé bitumineux.

## Patentansprüche

1. Pfropfpolymer **PG**, das eine Polymerhauptkette **P** und mindestens eine seitlich aufgepfropfte Einheit **G** umfasst, die an die Polymerhauptkette **P** gebunden ist, wobei die aufgepfropfte Einheit **G** die folgende allgemeine Formel (1) aufweist:
-S-R₁-X-R₂ (1)
wobei R₁ und R₂ unabhängig voneinander lineare oder verzweigte, ungesättigte oder gesättigte Kohlenwasserstoffgruppen darstellen, so dass die Gesamtzahl der Kohlenstoffatome der R₁ und R₂ Gruppen zwischen 2 und 110 liegt, X eine Amid-, Amidosäure-, Harnstoff- oder Urethanfunktion darstellt, wobei die aufgepfropfte Einheit **G** über das Schwefelatom an die Polymerhauptkette **P** gebunden ist.

2. Pfropfpolymer nach Anspruch 1, wobei die Gesamtzahl der Kohlenstoffatome der R₁ und R₂ Gruppen zwischen 4 und 90 liegt, vorzugsweise zwischen 8 und 70, bevorzugter zwischen 12 und 50, noch bevorzugter zwischen 16 und 40, noch bevorzugter zwischen 18 und 30, noch bevorzugter zwischen 20 und 24.

3. Pfropfpolymer nach Anspruch 1 oder 2, wobei R₁ eine lineare, gesättigte Kohlenwasserstoffgruppe der Formel CₙH₂ₙ darstellt und R₂ eine lineare, gesättigte Kohlenwasserstoffgruppe der Formel CₘH₂ₘ₊₁ darstellt, wobei n und m ganze Zahlen sind, so dass die Summe n + m zwischen 2 und 110 liegt.

4. Pfropfpolymer nach Anspruch 3, wobei n zwischen 1 und 60 liegt, vorzugsweise zwischen 2 und 50, bevorzugter zwischen 4 und 40, noch bevorzugter zwischen 6 und 25, noch bevorzugter zwischen 8 und 20, noch bevorzugter zwischen 9 und 15, noch bevorzugter zwischen 10 und 12 und m zwischen 1 und 50 liegt, vorzugsweise zwischen 2 und 40, bevorzugter zwischen 4 und 30, noch bevorzugter zwischen 6 und 25, noch bevorzugter zwischen 8 und 20, noch bevorzugter zwischen 9 und 15, noch bevorzugter zwischen 10 und 12.

5. Pfropfpolymer nach irgendeinem der Ansprüche 1 bis 4, wobei die Polymerhauptkette **P** aus der Co-polymerisation von konjugierten Dieneinheiten und von monovinylaromatischen Kohlenwasserstoffeinheiten resultiert, insbesondere aus der Co-polymerisation von Butadieneinheiten und Styroleinheiten.

6. Pfropfpolymer nach Anspruch 5, das einen Gehalt an Einheiten mit 1-2 Doppelbindungen umfasst, abgeleitet von konjugiertem Dien, insbesondere von Butadien, zwischen 5 und 70 Gewichts-% liegend, in Bezug auf die Gesamtmasse der konjugierten Dieneinheiten, insbesondere von Butadien, vorzugsweise zwischen 10% und 60% liegend, bevorzugter zwischen 15% und 50%, noch bevorzugter zwischen 18% und 40%, noch bevorzugter zwischen 20% und 30%, noch bevorzugter zwischen 22% und 25%.

7. Pfropfpolymer nach einem der Ansprüche 1 bis 6, wobei X eine Amidfunktion darstellt und die allgemeine Formel (1) wie folgt lautet:

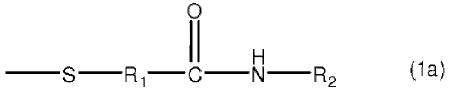

8. Verfahren zur Herstellung des Pfropfpolymers nach irgend**einem** der Ansprüche 1 bis 7, wobei in einem ersten Schritt mindestens ein Polymer **P** und mindestens ein Thiolderivat der allgemeinen Formel (2): HS-R₁-Y, danach in einem zweiten Schritt mindestens ein Derivat der allgemeinen Formel (3): Z-R₂ umgesetzt werden, wobei R₁ und R₂ unabhängig voneinander lineare oder verzweigte, ungesättigte oder gesättigte Kohlenwasserstoffgruppen darstellen, so dass die Gesamtzahl der Kohlenstoffatome der R₁ und R₂ Gruppen zwischen 2 und 110 liegt, Y eine Säure-, Alkohol- oder Aminfunktion darstellt, Z eine Säure-, Alkohol-, Amin- , Anhydrid- oder Isocyanatfunktion darstellt, mit der Maßgabe dass die Reaktion zwischen den beiden Funktionen Y und Z zu der Funktion X der allgemeinen Formel (1) führt.

9. Verwendung des Pfropfpolymers **PG** nach irgendeinem der Ansprüche 1 bis 7 in Beschichtungen, Lacken, Thermoplasten, Klebstoffen, Schmiermitteln, Kraftstoffen, Tinten, Zementen, Baustoffen, Gummi oder Bitumen.

10. Bitumen-/Polymerzusammensetzung, die mindestens ein Bitumen und mindestens ein Pfropfpolymer **PG** nach irgendeinem der Ansprüche 1 bis 7 umfasst.

11. Bitumen-/Polymerzusammensetzung nach Anspruch 10, die in Bezug auf das Gewicht der Bitumen-/Polymerzusammensetzung 0,1 bis 40 Gewichts-% **von** Pfropfpolymer **PG** umfasst, vorzugsweise von 0,5 bis 30%, bevorzugter von 1 bis 20%, noch bevorzugter von 2 bis 10%, noch bevorzugter von 3 bis 5%.

12. Verfahren zur Herstellung der Bitumen-/Polymerzusammensetzung nach Anspruch 10 oder 11, wobei mindestens ein Bitumen und mindestens ein Pfropfpolymer **PG** nach irgendeinem der Ansprüche 1 bis 7 bei einer Temperatur zwischen 80°C und 200°C gemischt wird, vorzugsweise zwischen 100°C und 180°C, bevorzugter zwischen 120°C und 160°C, über einen Zeitraum von 30 Minuten bis 4 Stunden, vorzugsweise von 1 Stunde bis 2 Stunden.

13. Verwendung des Pfropfpolymers **PG** nach irgendeinem der Ansprüche 1 bis 7 in einer Bitumen-/Polymerzusammensetzung, um diese Bitumen-/Polymerzusammensetzung thermoreversibel zu vernetzen.

14. Bituminöses Mischgut, das eine Bitumen-/Polymerzusammensetzung nach Anspruch 10 oder 11 umfasst und Granulate, die wahlweise Feinstoffe, Sand, Splitt umfassen.

15. Verwendung des Pfropfpolymers **PG** nach irgendeinem der Ansprüche 1 bis 7, um die Temperaturen der Beschichtung, der Auftragung und/oder der Verdichtung bei der Herstellung eines bituminösen Mischguts zu reduzieren.

## Claims

1. Graft polymer **GP** comprising a main polymer chain **P** and at least one side graft **G** connected to the main polymer chain **P**, the graft **G** having general formula (1):
-S-R₁-X-R₂ (1)
with R₁ and R₂ which represent independently of one another, linear or branched, unsaturated or saturated hydrocarbon groups such that the total number of carbon atoms of the R₁ and R₂ groups is comprised between 2 and 110, X which represents an amide, amido-acid, urea or urethane function, said graft **G** being connected to the main polymer chain **P** via the sulphur atom.

2. Graft polymer according to claim 1, in which the total number of carbon atoms of the R₁ and R₂ groups is comprised between 4 and 90, preferably between 8 and 70, more preferentially between 12 and 50, even more preferentially between 16 and 40, even more preferentially between 18 and 30, even more preferentially between 20 and 24.

3. Graft polymer according to claim 1 or 2, in which R₁ represents a linear, saturated hydrocarbon group, of formula CₙH₂ₙ and R₂ represents a linear, saturated hydrocarbon group, of formula CₘH₂ₘ₊₁ with n and m being integers such that the sum n + m is comprised between 2 and 110.

4. Graft polymer according to claim 3, in which n is comprised between 1 and 60, preferably between 2 and 50, more preferentially between 4 and 40, even more preferentially between 6 and 25, even more preferentially between 8 and 20, even more preferentially between 9 and 15, even more preferentially between 10 and 12 and m is comprised between 1 and 50, preferably between 2 and 40, more preferentially between 4 and 30, even more preferentially between 6 and 25, even more preferentially between 8 and 20, even more preferentially between 9 and 15, even more preferentially between 10 and 12.

5. Graft polymer according to any one of the claims 1 to 4, in which the main polymer chain **P** results from the copolymerization of conjugated diene units and monovinyl aromatic hydrocarbon units, in particular from the copolymerization of butadiene units and styrene units.

6. Graft polymer according to claim 5, comprising a content of units with 1-2 double bonds originating from the conjugated diene, in particular butadiene, comprised between 5% and 70% by mass, with respect to the total mass of the conjugated diene units, in particular butadiene, preferably between 10% and 60%, more preferentially between 15% and 50%, even more preferentially between 18% and 40%, even more preferentially between 20% and 30%, even more preferentially between 22% and 25%.

7. Graft polymer according to any one of claims 1 to 6, in which X represents an amide function and general formula (1) is as follows:

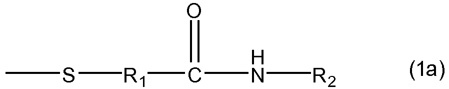

8. Process for the preparation of the graft polymer according to any one of claims 1 to 7, in which the following are reacted, in a first step, at least one polymer P and at least one thiol derivative of general formula (2): HS-R₁-Y, then in a second step at least one derivative of general formula (3): Z-R₂, with R₁ and R₂ which represent independently of one another, linear or branched, unsaturated or saturated hydrocarbon groups such that the total number of carbon atoms of the R₁ and R₂ groups is comprised between 2 and 110, Y which represents an acid, alcohol or amine function, Z which represents an acid, alcohol, amine, anhydride or isocyanate function, it being understood that the reaction between the two functions Y and Z leads to the X function of general formula (1).

9. Use of the graft polymer **GP** according to any one of claims 1 to 7, in coatings, paints, thermoplastics, glues, lubricants, fuels, inks, cements, construction materials, rubbers or bitumens.

10. Bitumen/polymer composition comprising at least one bitumen and at least one graft polymer **GP** according to any one of claims 1 to 7.

11. Bitumen/polymer composition according to claim 10, comprising 0.1 to 40% by mass of graft polymer **GP**, with respect to the mass of the bitumen/polymer composition, preferably 0.5 to 30%, more preferentially 1 to 20%, even more preferentially 2 to 10%, even more preferentially 3 to 5%.

12. Process for the preparation of the bitumen/polymer composition according to claim 10 or 11 in which at least one bitumen and at least one graft polymer **GP** according to any one of claims 1 to 7 are mixed at a temperature comprised between 80°C and 200°C, preferably between 100°C and 180°C, more preferentially between 120°C and 160°C, for a duration of 30 minutes to 4 hours, preferably 1 hour to 2 hours.

13. Use of the graft polymer **GP** according to any one of claims 1 to 7 in a bitumen/polymer composition for the thermoreversible cross-linking of said bitumen/polymer composition.

14. Bituminous mix comprising a bitumen/polymer composition according to claim 10 or 11 and aggregates optionally comprising fines, sand, gravel.

15. Use of the graft polymer **GP** according to any one of claims 1 to 7 to reduce the coating, spreading and/or compacting temperatures during the manufacturing of a bituminous mix.
